# EUROPEAN PATENT APPLICATION

(11) **EP 4 087 256 A1**
(43) Date of publication of application: **09.11.2022**
(21) Application number: 21172108.9
(22) Date of filing: 04.05.2021
(51) Int. Cl.: H04N 21/00, H04W 4/06

(54) **BROADCAST NETWORK AND METHOD**

(71) Applicant: Rohde & Schwarz GmbH & Co. KG, 81671 München (DE)
(72) Inventor: JANNER, Thomas, 82194 Gröbenzell (DE); OESTREICHER, Lars, 80538 München (DE); REITMEIER, Manfred, 84036 Landshut (DE); SINNHUBER, Johannes, 86916 Kaufering (DE); TAGA, Aziz, 81241 München (DE); UHLMANN, Maurice, 84427 St. Wolfgang (DE)
(74) Representative: Kehl, Ascherl, Liebhoff & Ettmayr Patentanwälte Partnerschaft mbB

(57) **Abstract**

The present disclosure provides a network manager comprising a data interface configured to communicatively couple to at least one radio access network of a broadcast network that is configured to wirelessly emit a load data signal, and to at least one load data source network; and a network scheduler configured to: receive request data regarding load data in the load data source network, identify alternative load data for incorporating with sections of the load data based on the request data, and provide configuration data for the purpose of configuring the at least one radio access network to use specific radio access network resources for transmission of the load data and the alternative load data; wherein the network scheduler is configured to define the configuration data based on at least one of the request data and the identified alternative load data. Further, a respective method is provided.

## Description

### TECHNICAL FIELD

The disclosure relates to a broadcast network and a method for managing a broadcast network.

### BACKGROUND

Although applicable to any combination of different networks, the present disclosure will mainly be described in conjunction with broadcast networks and cellular networks.

Today, the number of communication devices that are served in cellular networks increases steadily. One source of new communication devices is the increasing demand of users for mobile voice and data communication. Other sources of this increase are new applications, like Intemet-of-Things or loT devices.

With an increasing number of communication devices, cellular networks become more and more complex. Consequently, the technical and financial efforts required for building and managing such networks continually increase.

There is a need for reducing these efforts.

### SUMMARY

The above stated problem is solved by the features of the independent claims. It is understood, that independent claims of a claim category may be formed in analogy to the dependent claims of another claim category.

Accordingly, it is provided:
A network manager comprising a data interface configured to communicatively couple to a) at least one radio access network of a broadcast network that is configured to wirelessly emit a load data signal, and b) to at least one load data source network; and a network scheduler communicatively coupled to the data interface and configured to: receive request data regarding load data in the load data source network, identify alternative load data for incorporating with sections of the load data based on the request data, and provide configuration data for the purpose of configuring the at least one radio access network to use specific radio access network resources for transmission of the load data and the alternative load data; wherein the network scheduler is configured to define the configuration data based on at least one of the request data and the identified alternative load data.

Further, it is provided:
A method for managing a broadcast network, the method comprising receiving request data regarding load data in a load data source network; identify alternative load data for incorporating with sections of the load data based on the received request data; and providing configuration data for the purpose of configuring at least one radio access network of a broadcast network to use specific radio access network resources for transmission of the load data and the alternative load data in a respective load data signal; wherein the configuration data is defined based on at least one of the request data and the identified alternative load data.

The present disclosure acknowledges the fact that serving more devices in cellular networks increases the complexity of the networks, since smaller cells need to be provided, or more capable transmitters need to be provided, to serve the increased number of devices. With increasing capabilities, the complexity and therefore also the costs for the transmitters raise. The same may apply to the power consumption of such transmitters. Operating the cellular network therefore becomes more demanding technically and economically.

When planning a cellular network, the operator of the network may estimate the average load on the cellular network and dimension the cellular network accordingly. However, when a cellular network is dimensioned for an average load, the cellular network may experience congestion and overload situations.

Such situations may for example arise when an important event, like a live sports event is viewed by many users on their mobile devices. The data stream comprising e.g., video and audio data for such a sports event, needs to be provided to all transceivers of the cellular network that currently serve at least one user that wants to view the event. In addition, users today expect a flawless experience, where the video and audio data is distributed with low latencies and high quality, an expectation that is difficult to meet, especially under high-load conditions.

This is especially true, since mobile cellular networks have been based, and still rely on a strong unicast communication model to provide various services to their end users. However, nowadays consumers find their comfort while watching a huge amount of premium content, of which a high percentage is live media services.

On the other hand, broadcast networks are well established for broadcast and multicast data transmission like TV and radio transmissions via digital video broadcast like DVB-T , for terrestrial transmission, or DVB-S, for satellite transmission. Since broadcast networks are usually designed to provide broadcast or multicast one-way data transmission, these networks may operate efficiently with any number of receiving devices. Further, since the area of coverage of a transmitter of a broadcast network is larger than the area of coverage of a transmitter of a cellular network, which is especially the case for satellite-based broadcast networks, the network infrastructure of broadcast networks is less complex to build and maintain than the infrastructure of cellular networks.

The present disclosure acknowledges that users will demand more and more services from cellular networks on their mobile devices that either require overprovisioning or may lead to congestion in the cellular networks. The present disclosure, therefore, provides means for effectively using the infrastructure provided by broadcast networks to provide data to devices that usually operate in cellular networks.

A cellular network in the context of the present disclosure may be a communication network providing bi-directional wireless communication for electronic devices, like user equipment such as mobile phones, also called UE, loT devices and the like. Usually, a cellular network is a distributed network comprising "cells", wherein each cell is served by at least one fixed-location transceiver. A site hosting the fixed-location transceivers may also be called a base station. A cellular network usually allows transmission of voice, video and audio data and other types of content. Neighboring cells usually use different sets of frequencies to avoid interference between the single cells. Mobile devices in the cellular network may perform a hand-over when moving from one cell to another. All cells together form the cellular network and provide radio coverage over a wide geographical area, wherein small local cells, e.g. indoor cells, are also possible. A cellular network in the context of the present disclosure may also comprise a satellite-based cellular network. Such a satellite-based cellular network may offer bidirectional communication to receiving devices in small cells with low flying satellites. Usually, such a satellite-based cellular network will comprise a large number of satellites. These types of satellite-based cellular network may be designed for unicast data communication.

The single transceivers of a cellular network are usually communicatively coupled to a common network, also called core network or backbone network. Data may be served to the transceivers from the common network and may be provided from the transceivers into the common network. It is understood, that the common network not necessarily is a single network, but may also comprise different network segments that may be communicatively coupled to each other via other networks, like e.g. the internet or dedicated backbone networks.

In cellular networks traditionally, a point-to-point communication is performed, like e.g. when a telephone call is conducted between to devices. In modern cellular networks like e.g., 5G networks, multicast transmissions are also possible. Due to the limited size of the single cells in a cellular network, the data to be transmitted in a multicast mode hast to be transmitted to every single transceiver via the common network.

In the context of the present disclosure, the operator of a cellular network may also be called the MNO or mobile network operator.

A broadcast network in the context of the present disclosure may be a one-way communication network that usually provides at least one of audio communication and/or video communication in a one-way or unidirectional fashion to electronic devices, like radio receivers or TV sets. It is understood, that a broadcast in the context of the present disclosure may be terrestrial broadcast network, a satellite broadcast network or a combination of both.

It is understood, that in the context of the present disclosure, a broadcast network may also provide communication to devices that are usually served by cellular networks. Further, in the context of the present disclosure a broadcast network is not limited to broadcast transmissions, but may also provide multicast transmissions. A broadcast transmission in this context is to be understood as a transmission to all receivers within reach of a single transmitter. A multicast transmission in this context is to be understood as a transmission to a limited group of receivers within reach of a single transmitter, instead of all receivers.

A broadcast network may be formed by a group comprising at least one of a plurality of radio stations, a plurality television stations, or combined radio and television stations, or satellite stations. The term radio station refers to equipment for transmitting audio content wirelessly e.g., over the air. The term television station refers to equipment for transmitting audio and video content wirelessly e.g., over the air. The term satellite station refers generally to a satellite that is communicatively linked to a ground station and may be used as a radio access network or transmitter in the broadcast network.

It is understood, that for a broadcast network a common network, also called core network, may be provided that couples to the single transmitters, as explained above for cellular networks. If one or more satellites are part of the broadcast network, the respective ground stations may be communicatively coupled to the core network of the broadcast network. Since the area of coverage of a transmitter of a broadcast network is larger than the area of coverage of a transmitter of a cellular network, the common network needs to connect to a smaller number of transmitters and therefore usually is of lower complexity than the common network of a cellular network.

As explained above, the geographical area covered by each of the transmitters of a broadcast network is larger than the geographical area covered by each of the transmitters of a cellular network. In embodiments, the geographical area covered by each of the transmitters of a broadcast network may comprise an area larger than the geographical area covered by at least two transmitters of a cellular network, i.e. larger than two cells of the cellular network.

In examples, the area covered by a single terrestrial transmitter of a broadcast network may comprise a radius of about 1 km up to more than 100km. The area covered by a single transmitter of a cellular network may comprise a radius of up to 35 km. At the same time, the transmitting power of a transmitter in a broadcast network may range up to 20 kW. In cellular networks, the transmitting power of the respective transmitters may range up to 500 Watts. Further, the transmitters in broadcast networks will usually use other frequencies than the transmitters in cellular networks. The transmitters in the broadcast networks may for example use frequencies in the UHF band, for example between 470 MHz and 698 Mhz.

For satellites as transmitters, the size of the area of coverage may be size of the full earth globe, and the transmission power may be between 20W and 300W (depending on the bands and the usage).

Exemplary standards used in broadcast networks may comprise DVB-based protocols, especially DVB-T and DVB-S based protocols, ATSC-based protocols, and 5G for broadcast networks or any future broadcast network standard. In cellular networks, the respective standards like UMTS, LTE and 5G or any future cellular network protocol may be used.

In the context of the present disclosure, the operator of a broadcast network may also be called the BNO or broadcast network operator.

The cellular networks and the broadcast networks mentioned in the present disclosure may comprise so called radio access networks or RANs and core networks or CNs. A RAN or Radio Access Network provides a radio access technology, and usually resides between a user device and the respective CN. A RAN in the context of the present disclosure may comprise the base station with respective antennas and a connection to the CN, and/or a satellite with connection to the CN via a respective ground station.

The radio access networks, also called RANs, and core networks, also called CNs, mentioned in the present disclosure are not limited to a specific type of network. Nevertheless, in the present disclosure a RAN with regard to cellular networks may comprise at least one of a GRAN, also GSM radio access network, a GERAN, which is essentially the same as GRAN but specifying the inclusion of EDGE packet radio services, a UTRAN, also called UMTS radio access network, and an E-UTRAN, the Long Term Evolution (LTE) high speed and low latency radio access network, or a RAN according to any upcoming RAN standard, or satellite-based RAN.

Accordingly, in the present disclosure a RAN with regard to a broadcast network may comprise any technology that allows transmitting data in a broadcast or multicast manner to electronic devices. Such a RAN may for example comprise a DVB-T transmitter with respective antennas and a connection to the respective core network, or a satellite as DVB-S transmitter with respective antennas and a connection to the respective core network via the ground station of the satellite.

Possible RANs comprise, but are not limited to, multi-frequency network or MFN RANs, single frequency network or SFN RANs, and SC-PTM RANs, also called Single-Cell - Point-to-Multipoint RANs. The RANs in the context of the present disclosure may for example comprise so called LPLT transmitters, also called low-power low-tower transmitters, HPHT transmitters, also called high-power high-tower transmitters, MPMT transmitters, which are a hybrid transmitter combining elements of LPLT and HPHT transmitters. MPMT stands for Medium Power Medium Tower. MPMT transmitters may have an output power that comes in between LPLT and HPHT, e.g. 350W - 6KW, which automatically results in a coverage capability between those of LPLT and HPHT, e.g. 5KM - 30KM, depending on the specific deployment scenarios and other parameters. Further, a RAN in the context of the present disclosure may comprise at least one transmitter with a fixed geographical location. As explained above, a transmitter for a broadcast network may comprise a transmitting power of up to 20kW or more, and cover an area of more than 100km radius.

The term core network in the context of the present disclosure refers to a network that couples to the RANs of the respective network. Core networks are sometimes also referred to as backbone networks. It is understood, that any networking technology, like cable-based ethernet, optical fiber-based ethernet, or other network technologies may be used to transmit data in the core network to and from the RANs. The core network may further comprise connections to other networks, like the networks of content providers or the like.

It is understood, that radio access networks and core networks in the context of the present disclosure may comprise further elements, like network connections, network switches, network hubs, servers, and the like.

The present disclosure acknowledges, as indicated above, that data may be offloaded from load data source networks, like cellular networks, to a broadcast network. To support flexible offloading of load data to the broadcast network, the present disclosure provides the network manager.

The network manager comprises a data interface that communicatively couples a network scheduler to at least one radio access network of the broadcast network and at least one load data source network. Such a load data source network may be the core network of the broadcast network. The core network usually transports load data to the radio access networks for emission in a load data signal to the receiving devices. The load data source network may also comprise the content network of a content provider.

It is understood, that the load data source network and the radio access networks may be operated by the same operator. The network scheduler may therefore be communicatively coupled via a single network interface to the load data source network and the radio access networks. Communicatively coupled in this context refers to the data interface being capable of communicating with the respective entity, while a direct network connection or indirect network connection e.g., via other networks like the internet, is possible. Further, the data interface may comprise a single hardware interface or multiple hardware interfaces.

In other examples, the load data source network and the radio access networks may be operated by different operators and may not be provided in the same network. The data interface in such an example may communicatively couple to the different operators' networks as required directly or indirectly via a single or via multiple hardware interfaces.

The network manager of the present disclosure may be provided in the broadcast network. In such an embodiment the data interface may be an internal interface in the broadcast network. The network manager may for example be provided as dedicated element, like a server in the broadcast network. Such a server may be communicatively coupled to the core network of the broadcast network via a hardware-based data interface, like an Ethernet interface. The network manager may also be provided as an additional function in a server that is already present in the core network. Such a network manager may for example be provided as software application in the server or a function of a firmware or operating software of the server. Such a network manager may comprise the data interface as a software-based interface, like an API, or as a combination of a software-based and hardware-based interface.

The core network is usually communicatively coupled to at least one radio access network. It is understood, that the broadcast network may comprise any number of radio access networks that may all be coupled, directly or indirectly, to the core network. The single radio access networks may be distributed over a specific geographical area like e.g., a country or simply the area of operation of a network operator that operates the broadcast network. The core network distributes load data to the radio access networks that is to be distributed or emitted via the radio access networks. It is understood, that the core network may comprise routing mechanisms that allow transmitting specific pieces of load data only to those radio access networks that should emit the load data in respective load data signals. It is understood, that the load data refers to the content or content data that is to be transmitted to receiving devices. Such load data may comprise video data, audio data, software update data, or any other type of data that is to be transmitted.

It is understood, that the core network may comprise a respective interface or respective interfaces that allow operators of cellular networks or other content providers to provide the load data to the core network. Such interfaces may comprise hardware-based network interfaces, API-based or software-based interfaces, or a combination of both. The core network may for example be coupled via a hardware interface to a network of a content provider or cellular network operator directly or indirectly. The load data may be provided to the core network via an upload functionality that is provided by the core network. It is understood, that such an upload functionality may comprise security measures, like e.g. authentication and encryption. In embodiments, the core network may for example comprise one or more FTP or HTTP(S) servers, that allow a content provider to upload the load data. In case of live streaming data, the core network may also provide a streaming endpoint, that accepts the load data in the form of a stream for further processing in the core network. In other embodiments, the broadcast network e.g., a network controller or other elements of the core network, like a data loader, may be configured to retrieve the load data from a location that may be indicated by the provider of the load data.

If, as indicated above, the network manager is provided as part of the broadcast network, the request data as provided to the core network is directly available for the network manager. This is especially true, if the network manager is provided in an element of the core network.

The network manager may however also be provided outside of the broadcast network. This allows providing the function of the network manager as an external service to operators of broadcast networks.

In such embodiments, the network manager may be provided as a dedicated service. The expression dedicated service includes providing the service from a dedicated server, a virtualized server, as a cloud-based service, or any other form of providing the respective functionality. The data interface of such a network manager may comprise a hardware-based interface, like an Ethernet interface, a software-based interface comprising respective API-functions, upload and download functions, and control functions, or a combination of both.

If the network manager is not provided in the broadcast network, the request data in the load data source network is not directly available to the network manager. The data interface may therefore be capable of passively receiving and/or actively retrieving the request data from the load data source network. The load data source network may for example comprise a cellular network, a content distribution network or other content provider networks.

The network scheduler of the network manager receives request data via the data interface. The request data is data that initiates the transmission of load data via the broadcast network or accompanies load data that is to be transmitted via the broadcast network. The request data may be seen as a kind of metadata for load data that provides additional information about the load data. It is understood, that the request data may not only be provided prior to providing the load data. The request data may also be provided continuously with the load data.

The network scheduler identifies alternative load data for incorporating with sections of the load data based on the request data. Incorporating the alternative load data with the load data can include interleaving within, overlaying over portions, splicing it within, or any other similar operations. The load data may for example comprise a video stream, like e.g. a movie or video footage of a live event. The alternative load data may in such an example comprise commercials that may be transmitted at specific sections of the video stream.

To this end the network scheduler may also provide respective configuration data accompanying the alternative load data.

The configuration data defines parameters for how the alternative load data should be emitted via the radio access networks i.e., the radio access network resources. The request data therefore indirectly defines which radio access network resources should be used for emission of the alternative load data signal, without explicitly stating the radio access network resources. In cases it is possible for the request data to directly define or request specific radio access network resources for transmission of the load data.

The radio access network resources may refer to at least one of a transmission timeslot or time for transmission of the load data, a frequency of frequency range or bandwidth for transmission of the load data, and a geographical location or a transmitter for transmission of the load data, and a modulation scheme used for transmission of the load data, or other wireless radio access network resources, like a Cyclic Prefix, CP, : Sub-Carrier Spacing, SCS, Allocation Retention Priority, ARP, Pre-emption Capability Indicator, PCI, Pre-emption Vulnerability Indicator, PVI, Channel Quality Indicator, CQI (within radio access network), and Quality of service Class Indicator, QCI (within core network).

The request data received by the network scheduler may comprise general requirements for the transmission of the load data. The request data may for example indicated a time for transmission of load data. It is understood, the term "time" in the context of the present disclosure may refer to a specific point in time or time range and to a respective date like e.g., 12:00 on Saturday, or 13:00 - 15:00 on May 5. Of course, a year may also be included, while the next possible day may be assumed, if the year is not included. Further, the request data may provide an indication about which sections of the load data may be incorporated with alternative load data.

The network scheduler may now identify possible combinations of radio access network resources that may be used to incorporate the alternative load data over the original load data, and define respective configuration data.

In an example, a cellular network operator may request in respective request data the transmission of video load data between 16:00 and 18:00 next Sunday in Germany, and may indicate that alternative load data may be provided at 17:00 with a duration of 5 minutes. The network scheduler may now determine possible combinations of alternative load data, like e.g. commercials, and adequate radio access network resources that may be used for emitting load data signals comprising the alternative load data.

The respective configuration data may then be provided by the network scheduler to the radio access networks. In embodiments, the network scheduler may also provide the configuration data to the core network of the broadcast network.

The configuration data will allow the radio access networks to emit the load data signal comprising the alternative load data with the radio access network resources defined by the network scheduler. If the configuration data indicates that the load data should only be distributed in specific areas, the network scheduler may also identify the relevant radio access networks and provide the configuration data to the respective radio access networks only. The load data source network may also be instructed to provide the load data to the respective radio access networks only.

It is understood, that the network scheduler may provide the configuration data to the radio access networks prior to the load data source network providing the load data to the respective radio access networks. To this end, the configuration data may identify the load data with a respective identifier that may be provided in the configuration data and the load data. This allows for example pre-configuring the radio access networks when the request data is received, which may be long before the load data is to be emitted, and therefore long before the load data is provided to the broadcast network e.g., the core network or the radio access networks. This may for example be the case, when a cellular network operator reserves radio access network resources for the transmission of a live event, like a sports event or a live concert, long before the event is happening.

The radio access networks may comprise respective controllers that receive and store the configuration data and control the transmitter elements in the radio access networks accordingly. In modern network architectures, single elements may be virtualized. Therefore, the controllers of the radio access networks may also be provided as virtualized controllers in a server that is provided in the respective core network. Respective configuration data may then be provided from the virtualized controllers to the other elements of the radio access networks. It is understood, with the possibility of virtualizing network elements, that an element that is disclosed in the present disclosure as being part of or being comprised by another element, may be functionally linked to the other element. At the same time such an element may be virtualized and provided at another location but linked via respective data connections to the other element.

It is understood, that the configuration data, the load data and the alternative load data may be provided to the radio access networks as separate information, especially if the configuration data is provided before the load data. However, in cases where the configuration data is provided at the same time as the load data, the configuration data, the load data and the alternative load data may be provided to the radio access networks as combined data. The network scheduler may for example receive the load data via the data interface and provide the configuration data as a header to the load data and/or the alternative load data. Alternatively, the network scheduler could provide the configuration data to the load data source network, which could add the configuration data as header data to the load data and/or the alternative load data. This also allows dynamically changing the configuration data for different segments of the load data that comprise a dedicated header.

A broadcast network in the context of the present disclosure is capable of dynamically receiving the load data from e.g., a cellular network, and of transmitting the load data to electronic devices, that usually receive the load data via the cellular network. Instead of by a cellular network, the load data may also be provided directly by a content distribution network or other content providers. The network manager allows dynamically replacing sections of the original load data with alternative load data.

The network scheduler automatically completes the requests of the providers of the load data in the configuration data to provide at least one possible complete set of radio access network resources that is required to transmit the load data.

A complete set in this regard refers to a set that defines, at least indirectly, all radio access network resources that are required to configure the radio access network for transmission of the load data. A complete set may therefore comprise a time and/or duration for transmission of the load data, a frequency and/or frequency range for transmission of the load data, and a geographical location for the transmission of the load data.

Especially for cellular networks, the broadcast network provides a kind of backup network or offloading network for high load situations. Further, via the network scheduler an operator of such a network, like a cellular network, may dynamically offload load data into the broadcast network. It is understood, that the respective receiving devices may be informed via the respective network e.g., the cellular network, about the transmission of the load data via the broadcast network.

Further embodiments of the present disclosure are subject of the further dependent claims and of the following description, referring to the drawings.

In an embodiment, the request data may comprises at least one of data type of at least one of the load data and the alternative load data, a transmission time or time slot for transmission of at least one of the load data and the alternative load data, a geographical location for transmission of at least one of the load data and the alternative load data, userdata about users of intended receiving devices, and provider data about a provider of at least one of the load data and the alternative load data.

The request data may refer to a data type of the load data. The data type may for example indicate that the load data is video or audio data or program data, for example for a software update of loT devices.

In the case of the load data comprising audio or video data, incorporating may simply be performed by replacing the original load data with the alternative load data. If the load data comprises program data or other general data, incorporating the load data with the alternative load data may comprise replacing the complete load data. This may for example be used by an operator of receiving devices, like loT devices or interconnected vehicles, to change the software the is provided via an over the air update. For example, a software update may have been scheduled and an error in that software update may be identified, after the original software update is already distributed to the broadcast network. The load data may then be overwritten with the alternative load data that may comprise an improved software update where the identified error is corrected.

The request data may further comprise additional information about the type of load data. If the load data for example comprises an audio stream or a video stream, the request data may further indicate the type of content of the audio stream or video stream. The request data may for example indicated that the content is a movie, a series, live footage of a live event, like for example a sports event or a concert. The request data may further indicate the specific type of content, for example an action movie, a comedy movie, a live soccer match, a tennis match, or the like.

The request data may also provide similar information for the alternative load data. The request data may for example indicate which type of alternative load data is acceptable for the provider of the load data to be incorporated with the original load data.

The provider of the load data may for example indicate that only commercials for specific groups of products should be incorporated a video stream. The provider of the load data may either allow only specific groups or exclude specific groups.

The request data may also refer to a transmission time or time slot for transmission of the load data and/or the alternative load data. The request data may indicate when the load data is transmitted. Further, the request data may also indicate specifically when the alternative load data may be incorporated with the original load data. The request data may for example indicate respective sections for incorporating the alternative load data by indicating start and end times with regard to the running time of the original load data.

In an example the original load data may be a 112 min video, the request data may indicate that the alternative load data may be incorporated from minute 30 to minute 36, and from minute 90 to minute 100.

As alternative, the request data may be provided concurrently with the load data and indicate if a current section of the load data may be incorporated or not, for example as binary indication, like 0 or 1, no or yes. Such request data may for example be provided as metadata in the audio or video stream. Especially for live events, this binary information may be added by the provider of the original load data as required, for example to exclude that alternative content is incorporated during important events, like for example a penalty kick.

The request data may also refer to a geographical location for transmission of at least one of the load data and the alternative load data. Especially, regarding the transmission of the alternative load data, the request data may indicate for which geographical regions the alternative load data may be incorporated over the original load data.

The indication of geographical locations may also be combined with indicating the type or a specific alternative load data. For example, a political party may want to place commercials in the video of a sports event, but only in a geographical region where elections will be held soon. Generally, companies may want to place commercials during certain events but only in the geographical region in which they operate.

The request data may also comprise user data. The user data may provide information about the users of the receiving devices that will receive the load data and the alternative load data. Knowledge about the users that own the receiving devices allows the network scheduler to select respective alternative load data that is adequate for the users. For example, the request data may comprise information about the user's browsing history, preferences, past searches, recent purchases, past locations, etc., that indicate the preferences of the users requesting the load data. Generally, the request data may comprise information about the user or the user's device that may be available to a cellular network operator or on the user's device.

The request data may also comprise provider data about providers of the load data and the alternative load data.

In a further embodiment, the network manager may comprise a data identification database configured to store identification information indicating which alternative load data is adequate for incorporating with load data based on the request data provided for the load data.

As indicated above, not all types of alternative load data should be incorporated over every type of original load data. Therefore, the data identification database is provided that allows easily identifying adequate alternative load data.

The data identification database may for example store identifiers of adequate alternative load data for specific data types of the load data, or for specific transmission times, or for specific users, for example children, youths, and adults.

The identifiers may be names or codes for the respective alternative load data, or URIs that allow retrieving the specific load data.

In another embodiment, the network manager may comprise a transcoder configured to transcode identified alternative load data based on the request data.

The alternative load data may be provided in another format than the original load data. This may especially be the case, if the alternative load data is provided by another source than the original load data.

In addition, the request data may for example also comprise data regarding a resolution of video data, a data rate of the video data, a codec used for encoding the video data and the like. Such request data no necessarily needs to be explicitly defined, but may also be derived from the original load data.

As indicated above, the alternative load data may be provided in another format. To allow the receiving devices to receive the alternative load data, the alternative load data may be transcoded by the transcoder to match the original load data.

In an embodiment, the network manager may comprise an incorporation processor configured to incorporate the identified alternative load data over the load data based on the defined configuration data by at least one of replacing the original load data with the alternative load data, and incorporating sections of the alternative load data over sections of the original load data.

After the alternative load data is identified by the network scheduler and the configuration data is provided, the broadcast network, for example a respective component in the core network, may perform the incorporating of the alternative load data over the original load data and procure the incorporated load data with the respective configuration data to the radio access networks.

However, such an element may not be available in the broadcast network. The network manager may therefore comprise the incorporation processor that may perform the incorporating. To this end, the network manager may receive the original load data and the alternative load data via the data interface.

The incorporation processor may simply replace the respective sections of the load data. As alternative, the incorporation processor may also incorporate or superimpose at least sections of the alternative load data over the original load data.

If the original load data for example comprises video footage, the incorporation processor may for example overlay the alternative load data only in an upper or lower section, like the upper 20% or the lower 20% of the original video. The alternative load data may be provided in a respective format, that fits that section.

In general, the alternative load data may be incorporated with the original load data by replacing the original load data, as Picture-In-Picture data, as audio only overlay, as video only overlay, and the like.

In yet another embodiment, the network manager may comprise a rule database configured to store rules regarding the identification of the alternative load data and the definition of the configuration data. The network scheduler may be communicatively coupled to the rule database and may be configured to identify the alternative load data and define the configuration data based on the stored rules.

The rule database may store rules regarding how to incorporate the alternative load data for different providers of load data. The rule database may be seen as a user management for the providers of the load data.

The rules may for example refer to the rights of the single providers of load data to accept or reject the incorporating of alternative load data.

A provider of the load data may for example have a service level agreement with the operator of the network manager or the broadcast network provides him with a reduced price for data offloading, but that also binds him to accepting the alternative load data provided by the operator of the network manager or the broadcast network. Such an agreement may be called a "freemium" agreement.

Other providers may for example have a service level agreement with the operator of the network manager that does not bind them to accepting the alternative load data provided by the operator of the network manager or the broadcast network. Or the broadcast network operator provides them with an increased price for data offloading and not accepting the alternative load data provided by the operator of the network manager or the broadcast network.

The network scheduler may therefore first verify if the original load data may be incorporated with alternative load data. The respective rules may be provided in the form of access rights for the operator of the network manager or the broadcast network accessing the original load data.

The rules may also indicate how the alternative load data is to be incorporated over the original load data. As indicated above, the alternative load data may be incorporated over the original load data by replacing the original load data, as Picture-In-Picture data, as audio only overlay, as video only overlay, and the like.

The rules may also indicate, which types of alternative load data are acceptable for the provider of the original load data. If the alternative load data comprises commercials, the rules may for example indicate that only commercials for children should be provided as alternative load data, or that commercials regarding beer and other alcoholic beverages should be provided. The rules may also indicate, which types of commercials should not be provided as alternative load data.

In a further embodiment, the network scheduler may be configured to provide the configuration data further based on a radio access network resources schedule of the broadcast network that comprises information about reservations of radio access network resources for the broadcast network.

The radio access network resources schedule represents the availability of the radio access network resources for different points in time in the broadcast network. The radio access network resources schedule, therefore, allows identifying possible combinations of radio access network resources for transmission of load data, that is requested via the request data for specific points in time, and the alternative load data.

The radio access network resources schedule may be stored in the network scheduler, or a dedicated storage, like a database, and may comprise information about reservations or utilizations of the single radio access network resources. It is understood, that the radio access network resources schedule may apply only to those radio access network resources that are limited.

Further, the radio access network resources schedule may be provided in any adequate format. The radio access network resources schedule may for example be based on time-slots, and may indicate for a specific radio access network resource, which time slots are occupied by the respective radio access network resource. In another embodiment, the radio access network resources schedule instead of using time slots, may indicate for every radio access network resource a start time and an end time. This allows more flexibly reserving the single radio access network resources without being bound to the time slots.

When used in combination with the below-mentioned user-accessible interface that is accessible via a data network, the radio access network resources schedule may be shown in calendar form.

The radio access network resources schedule may further store the amount that is available of every radio access network resource. This information may in embodiments be stored individually for single elements of the broadcast network. For example, different radio access networks may comprise different transmitters with different capabilities regarding e.g., bandwidth, modulation schemes, frequency ranges, and the like. If the radio access network resources schedule stores such information individually for all elements of the broadcast network, it is possible to effectively select all available radio access network resources for a transmission of load data.

The present disclosure is also meant to expressly disclose a broadcast network comprising the network manager. Such a broadcast network may comprise at least one radio access network, a core network as load data source network, and a network manager.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic diagram of an embodiment of a network manager according to the present disclosure, a load data source network and a broadcast network;
Figure 2 shows a schematic diagram of another embodiment of a network manager according to the present disclosure, a load data source network and a broadcast network;
Figure 3 shows a schematic diagram of another embodiment of a network manager according to the present disclosure, a load data source network and a broadcast network; and
Figure 4 shows a flow diagram of an embodiment of a method according to the present disclosure.

In the figures like reference signs denote like elements unless stated otherwise.

### DETAILED DESCRIPTION OF THE DRAWINGS

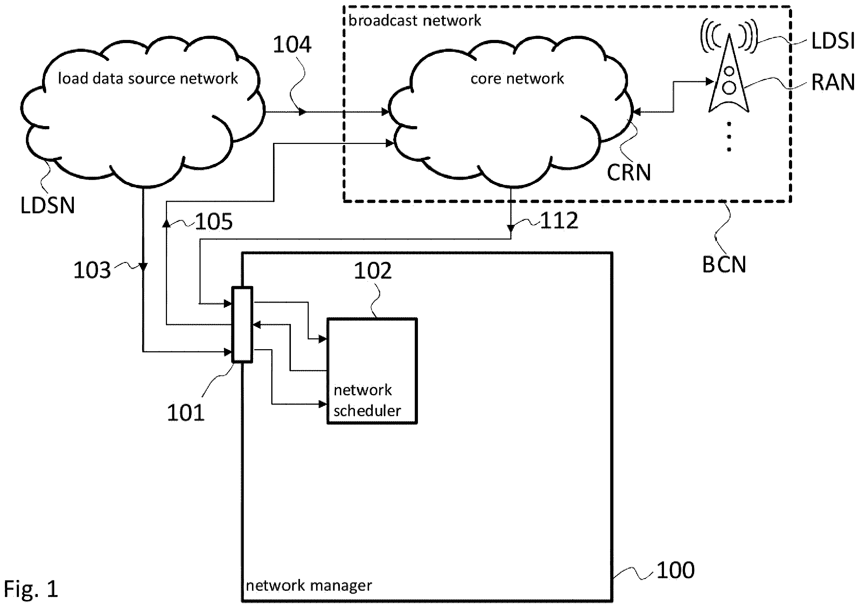

Figure 1 shows a schematic diagram of a network manager 100 together with a load data source network LDSN and a broadcast network BCN.

The load data source network LDSN may be the network of a load data provider, like for example a streaming media service. It is understood, that the load data source network LDSN may comprise data storages, network devices and any other element required to provide the respective services offered by the load data source network LDSN.

The broadcast network BCN comprises a core network CRN that is communicatively coupled to a plurality of radio access networks RAN that emit wireless load data signals LDSI. Forsake of clarity, only one radio access network RAN is shown, and more radio access networks RAN are hinted at by three dots. It is understood, that the broadcast network BCN may comprise any number of radio access networks RAN distributed over the area of operation of the operator of the broadcast network BCN. The core network CRN provides load data 104 to the radio access networks RAN for transmission to receiving devices in the load data signals LDSI. The load data 104 may be provided from the load data source network LDSN to the core network CRN directly.

In embodiments, the load data source network LDSN may be implemented as the core network CRN. In such embodiments, the load data 104 may be provided from any other source to the core network CRN. Further, it is understood, that the above-presented explanations regarding load data source networks and broadcast networks may be applied to the load data source network LDSN and the broadcast network BCN.

In addition, in other embodiments, the network manager 100 may be provided as component of the load data source network LDSN or as component of the broadcast network BCN, especially of the core network CRN.

The network manager 100 comprises a data interface 101 that is internally communicatively coupled to a network scheduler 102. Externally, the data interface 101 is communicatively coupled to the load data source network LDSN and to the broadcast network BCN.

The load data source network LDSN provides request data 103 regarding load data 104 in the load data source network LDSN to the network scheduler 102. Further, the broadcast network BCN provides data about available alternative load data 112 to the network manager 100. It is understood, that the alternative load data 112 may be stored in the broadcast network BCN. The alternative load data 112 may in other examples also be stored in the load data source network LDSN and/or the network manager 100.

It is understood, that the load data 104 may be provided directly from the load data source network LDSN to the broadcast network BCN for transmission via the load data signal LDSI.

The network scheduler 102 receives the request data 103 regarding load data 104 in the load data source network LDSN. Based on the request data 103 the network scheduler 102 identifies alternative load data 112 for incorporating with sections of the load data, and provides respective configuration data 105 for the purpose of configuring the radio access networks RAN to use specific radio access network resources for transmission of the load data 104 and the alternative load data 112. Of course, the network scheduler 102 may define the configuration data 105 based on at least one of the request data 103 and the identified alternative load data 112.

The request data 103 may for example comprise a data type of at least one of the load data 104 and the alternative load data 112, a transmission time or time slot for transmission of at least one of the load data 104 and the alternative load data 112, a geographical location for transmission of at least one of the load data 104 and the alternative load data 112, user data about users of intended receiving devices, and provider data about a provider of at least one of the load data 104 and the alternative load data 112.

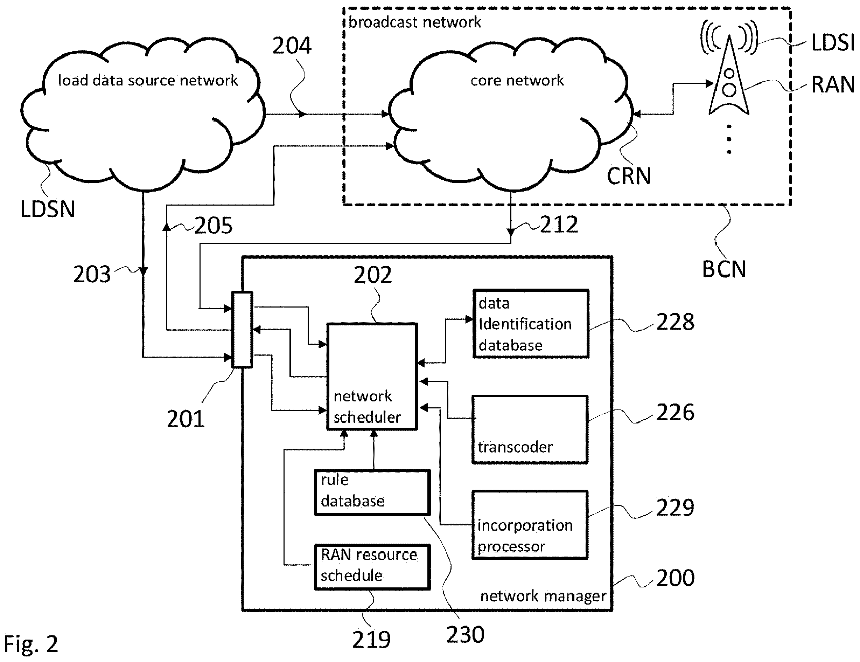

Figure 2 shows another a network manager 200 with a load data source network LDSN and a broadcast network BCN. The above explanations regarding the load data source network LDSN and the broadcast network BCN apply mutatis mutandis.

The network manager 200 is based on the network manager 100, and therefore comprises a data interface 201 that is internally communicatively coupled to a network scheduler 202. Externally, the data interface 201 is communicatively coupled to the broadcast network BCN and the load data source network LDSN. The above-presented explanations regarding the network manager 100 and its elements also apply to the network manager 200 and its elements mutatis mutandis.

The network manager 200 further comprises a data identification database 228, a transcoder 226, an incorporation processor 229, a rule database 230, and radio access network resources schedule 219 that are communicatively coupled to the network scheduler 202.

The network scheduler 202 may provide the configuration data 205 further based on a radio access network resources schedule 219 of the broadcast network BCN that comprises information about reservations of radio access network resources for the broadcast network BCN.

The data identification database 228 stores identification information indicating which alternative load data 212 is adequate and may therefore be used for incorporating with the load data 204 based on the request data 203 provided for the load data 204.

The transcoder 226 may transcode identified alternative load data 212 based on the request data 203 to match the load data 204.

The incorporation processor 229 may incorporate the identified alternative load data 212 with the load data 204 based on the defined configuration data 205 by at least one of replacing the original load data 204 with the alternative load data 212, and incorporating sections of the alternative load data 212 over sections of the original load data 204.

The rule database 230 stores rules regarding the identification of the alternative load data 212 and the definition of the configuration data 205. The network scheduler 202 may use the rules to identify the alternative load data 212 and define the configuration data 205 based on the stored rules.

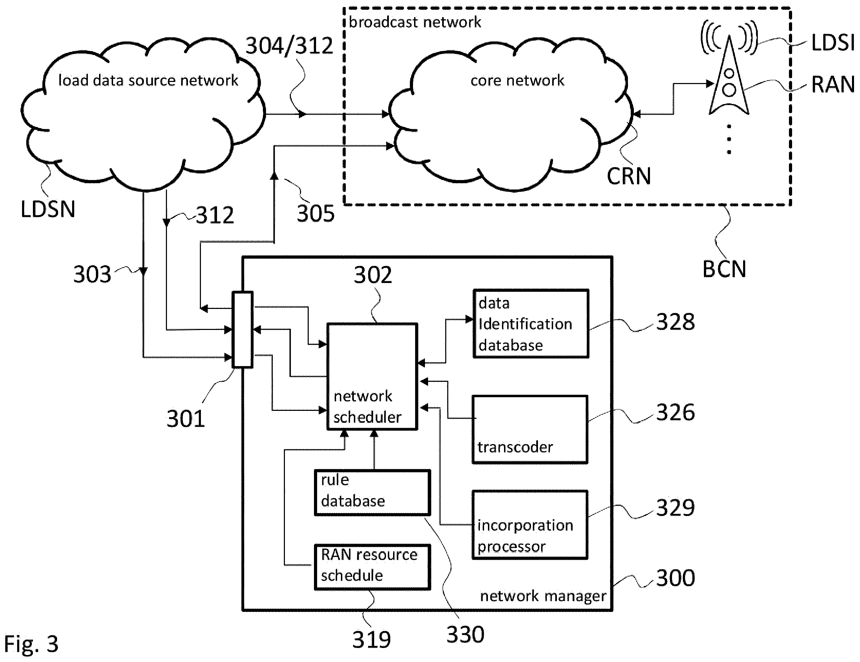

Figure 3 shows another network manager 300. The network manager 300 is based on the network manager 200, and therefore comprises a data interface 301 that is internally communicatively coupled to a network scheduler 302. Externally, the data interface 301 is communicatively coupled to the broadcast network BCN. The network manager 300 further comprises data identification database 328, a transcoder 326, an incorporation processor 329, a rule database 330, and radio access network resources schedule 319 that are communicatively coupled to the network scheduler 302. The above-presented explanations regarding the network manager 200 and its elements also apply to the network manager 300 and its elements mutatis mutandis.

In contrast to the arrangement of figure 2, in figure 3 the network manager 300 receives the load data 304 and the alternative load data 312 from the load data source network LDSN.

It is understood, that the network manager 300 may also provide the configuration data 305 to the load data source network LDSN instead of the broadcast network BCN.

Further, it is understood, that in other embodiments, any of the data identification database 328, a transcoder 326, an incorporation processor 329, a rule database 330, and radio access network resources schedule 319 may be omitted in the network manager 300, and also the network manager 200.

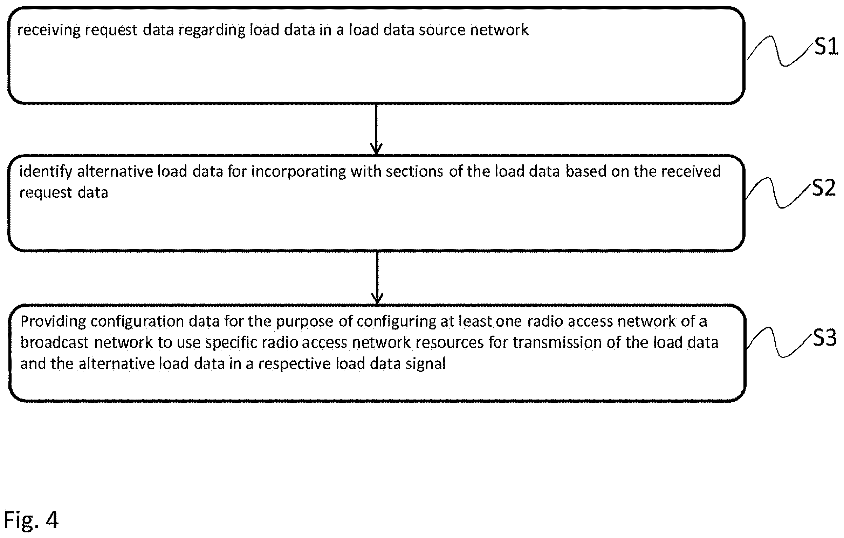

For sake of clarity in the following description of the method-based Fig. 4 the reference signs used above in the description of apparatus based Figs. 1 - 3 will be maintained.

Figure 4 shows a flow diagram of a method for managing a broadcast network BCN. The method comprises receiving S1 request data 103, 203, 303 regarding load data 104, 204, 304 in a load data source network LDSN, identify S2 alternative load data 112, 212, 312 for incorporating with sections of the load data 104, 204, 304 based on the received request data 103, 203, 303, providing S3 configuration data 105, 205, 305 for the purpose of configuring at least one radio access network RAN of a broadcast network BCN to use specific radio access network resources for transmission of the load data 104, 204, 304 and the alternative load data 112, 212, 312 in a respective load data signal LDSI, wherein the configuration data 105, 205, 305 is defined based on at least one of the request data 103, 203, 303 and the identified alternative load data 112, 212, 312.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

### LIST OF REFERENCE SIGNS

- 100, 200, 300: network manager
- 101, 201, 301: data interface
- 102, 202, 302: network scheduler
- 103, 203, 303: request data
- 104, 204, 304: load data
- 105, 205, 305: configuration data
- 112, 212, 312: alternative load data

- 219, 319: radio access network resources schedule
- 226, 326: transcoder
- 228, 328: data identification database
- 229, 329: incorporation processor
- 230, 330: rule database

- RAN: radio access network
- LDSI: load data signal
- BCN: broadcast network
- CRN: core network
- LDSN: load data source network

- S1, S2, S3: method step

## Claims

1. Network manager (100, 200, 300) comprising:
a data interface (101, 201, 301) configured to communicatively couple to a) at least one radio access network (RAN) of a broadcast network (BCN) that is configured to wirelessly emit a load data signal (LDSI), and b) to at least one load data source network (LDSN); and
a network scheduler (102, 202, 302) communicatively coupled to the data interface (101, 201, 301) and configured to:
receive request data (103, 203, 303) regarding load data (104, 204, 304) in the load data source network (LDSN),
identify alternative load data (112, 212, 312) for incorporating with sections of the load data based on the request data (103, 203, 303), and
provide configuration data (105, 205, 305) for the purpose of configuring the at least one radio access network (RAN) to use specific radio access network resources for transmission of the load data (104, 204, 304) and the alternative load data (112, 212, 312);
wherein the network scheduler (102, 202, 302) is configured to define the configuration data (105, 205, 305) based on at least one of the request data (103, 203, 303) and the identified alternative load data (112, 212, 312).

2. Network manager (100, 200, 300) according to claim 1, wherein the request data (103, 203, 303), comprises at least one of:
a data type of at least one of the load data (104, 204, 304) and the alternative load data (112, 212, 312),
a transmission time or time slot for transmission of at least one of the load data (104, 204, 304) and the alternative load data (112, 212, 312),
a geographical location for transmission of at least one of the load data (104, 204, 304) and the alternative load data (112, 212, 312),
user data about users of intended receiving devices, and
provider data about a provider of at least one of the load data (104, 204, 304) and the alternative load data (112, 212, 312).

3. Network manager (100, 200, 300) according to any one of the preceding claims, comprising a data identification database (228, 328) configured to store identification information indicating which alternative load data (112, 212, 312) is adequate for incorporating with the load data (104, 204, 304) based on the request data (103, 203, 303) provided for the load data (104, 204, 304).

4. Network manager (100, 200, 300) according to any one of the preceding claims, comprising a transcoder (226, 326) configured to transcode identified alternative load data (112, 212, 312) based on the request data (103, 203, 303).

5. Network manager (100, 200, 300) according to any one of the preceding claims, comprising an incorporation processor (229, 329) configured to incorporate the identified alternative load data (112, 212, 312) with the load data (104, 204, 304) based on the defined configuration data (105, 205, 305) by at least one of:
replacing the original load data (104, 204, 304) with the alternative load data (112, 212, 312), and
incorporating sections of the alternative load data (112, 212, 312) over sections of the original load data (104, 204, 304).

6. Network manager (100, 200, 300) according to any one of the preceding claims, comprising a rule database (230, 330) configured to store rules regarding the identification of the alternative load data (112, 212, 312) and the definition of the configuration data (105, 205, 305);
wherein the network scheduler (102, 202, 302) is communicatively coupled to the rule database (230, 330) and is configured to identify the alternative load data (112, 212, 312) and define the configuration data (105, 205, 305) based on the stored rules.

7. Network manager (100, 200, 300) according to any one of the preceding claims, wherein the network scheduler (102, 202, 302) is configured to provide the configuration data (105, 205, 305) further based on a radio access network resources schedule (219, 319) of the broadcast network (BCN), the radio access network resources schedule (219, 319) comprising information about reservations of radio access network resources for the broadcast network (BCN).

8. Method for managing a broadcast network (BCN), the method comprising:
receiving (S1) request data (103, 203, 303) regarding load data (104, 204, 304) in a load data source network (LDSN);
identify (S2) alternative load data (112, 212, 312) for incorporating with sections of the load data (104, 204, 304) based on the received request data (103, 203, 303); and
providing (S3) configuration data (105, 205, 305) for the purpose of configuring at least one radio access network (RAN) of a broadcast network (BCN) to use specific radio access network resources for transmission of the load data (104, 204, 304) and the alternative load data (112, 212, 312) in a respective load data signal (LDSI);
wherein the configuration data (105, 205, 305) is defined based on at least one of the request data (103, 203, 303) and the identified alternative load data (112, 212, 312).

9. Method according to claim 8, wherein the request data (103, 203, 303), comprises at least one of:
a data type of at least one of the load data (104, 204, 304) and the alternative load data (112, 212, 312),
a transmission time or time slot for transmission of at least one of the load data (104, 204, 304) and the alternative load data (112, 212, 312),
a geographical location for transmission of at least one of the load data (104, 204, 304) and the alternative load data (112, 212, 312),
user data about users of intended receiving devices, and
provider data about a provider of at least one of the load data (104, 204, 304) and the alternative load data (112, 212, 312).

10. Method according to any one of the preceding method-based claims, comprising storing identification information indicating which alternative load data (112, 212, 312) is adequate for incorporating with the load data (104, 204, 304) based on the request data (103, 203, 303) provided for the load data (104, 204, 304);
and at least one of identifying the alternative load data (112, 212, 312), and defining the configuration data (105, 205, 305) based on the stored identification information.

11. Method according to any one of the preceding method-based claims, comprising transcoding identified alternative load data (112, 212, 312) based on the request data (103, 203, 303).

12. Method according to any one of the preceding method-based claims, comprising incorporating the identified alternative load data (112, 212, 312) with the load data (104, 204, 304) based on the defined configuration data (105, 205, 305) by at least one of:
replacing the original load data (104, 204, 304) with the alternative load data (112, 212, 312), and
incorporating sections of the alternative load data (112, 212, 312) over sections of the original load data (104, 204, 304).

13. Method according to any one of the preceding method-based claims, comprising storing rules regarding the identification of the alternative load data (112, 212, 312) and the definition of the configuration data (105, 205, 305);
and identifying the alternative load data (112, 212, 312) and defining the configuration data (105, 205, 305) based on the stored rules.

14. Method according to any one of the preceding method-based claims, wherein the configuration data (105, 205, 305) is further defined based on a radio access network resources schedule (219, 319) of the broadcast network (BCN), the radio access network resources schedule (219, 319) comprising information about reservations of radio access network resources for the broadcast network (BCN).
